# EUROPÄISCHE PATENTSCHRIFT

(11) **EP 3 819 524 B1**
(45) Veröffentlichungstag und Bekanntmachung des Hinweises auf die Patenterteilung: **31.08.2022**
(21) Anmeldenummer: 20200628.4
(22) Anmeldetag: 07.10.2020
(51) Int. Cl.: F16H 63/34

(54) **VORRICHTUNG ZUR BETÄTIGUNG EINER PARKSPERRE EINES GETRIEBES EINES FAHRZEUGES, INSBESONDERE EINES AUTOMATIKGETRIEBES EINES KRAFTFAHRZEUGES**
DEVICE FOR ACTUATING A PARKING LOCK OF A TRANSMISSION OF A VEHICLE, IN PARTICULAR OF AN AUTOMATIC TRANSMISSION OF A MOTOR VEHICLE
DISPOSITIF DE FONCTIONNEMENT D'UN FREIN DE STATIONNEMENT D'UNE TRANSMISSION D'UN VÉHICULE, EN PARTICULIER D'UNE TRANSMISSION AUTOMATIQUE D'UN VÉHICULE AUTOMOBILE

(30) Priorität: 11.11.2019 DE 102019217395
(43) Veröffentlichungstag der Anmeldung: 12.05.2021
(73) Patentinhaber: Volkswagen Aktiengesellschaft, 38440 Wolfsburg (DE)
(72) Erfinder: Busch, Christian, 38154 Königslutter (DE)

(56) Entgegenhaltungen:
- EP-A2- 1 199 232
- DE-A1- 4 447 512
- DE-A1- 10 105 637
- DE-A1-102010 053 505
- DE-A1-102016 223 551

## Beschreibung

Die Erfindung betrifft eine Vorrichtung zur Betätigung einer Parksperre eines Getriebes eines Fahrzeuges, insbesondere eines Automatikgetriebes eines Kraftfahrzeuges.

Im Stand der Technik sind eine Vielzahl von Vorrichtungen zur Betätigung einer Parksperre eines Getriebes eines Fahrzeuges, insbesondere eines Automatikgetriebes eines Kraftfahrzeuges, bereits bekannt. Derartige Vorrichtungen weisen mindestens einen ansteuerbaren und/oder elektrisch betreibbaren Parksperrenaktuator auf, wobei mit Hilfe des Parksperrenaktuators ein Sperrelement in eine Verriegelungsposition oder das Sperrelement in eine Entriegelungsposition bewegbar und/oder bringbar ist. In der Verriegelungsposition des Sperrelementes ist die Parksperre des Getriebes wirksam aktiviert und in der Entriegelungsposition des Sperrelementes ist die Parksperre des Getriebes wirksam deaktiviert. Weiterhin ist ein Notbetätigungsmechanismus vorgesehen bzw. vorhanden, mit dessen Hilfe - bei entsprechender Betätigung - das Sperrelement in eine Entriegelungsposition zur Deaktivierung der Parksperre bewegbar und/oder bringbar ist. Der Notbetätigungsmechanismus wird von einem Benutzer insbesondere dann verwendet, wenn eine elektrische Ansteuerung und/oder der elektrische Betrieb des Parksperrenaktuators ausgefallen ist, bspw. wenn das elektrische System des Fahrzeugs ausgefallen ist. Eine andere Anwendung bzw. Betätigung des Notbetätigungsmechanismus kann dazu dienen, dass ein Benutzer eine Bewegung des Fahrzeugs - bei noch aktivierter Parksperre - realisieren möchte und hierfür dann den Notbetätigungsmechanismus zur Deaktivierung der Parksperre bedient. Beispielsweise kann dies in der Produktionshalle eines Automobilherstellers notwendig sein, wenn ein Fahrzeug auf dem Band über eine kurze Strecke verschoben und/oder bewegt werden muss. Hierzu weist der Notbetätigungsmechanismus mindestens ein Seilzugelement auf, wobei wenn der Notbetätigungsmechanismus von einem Benutzer betätigt wird und am Seilzugelement eine Zugkraft ausgeübt wird dann das Sperrelement in seine Entriegelungsposition zur Deaktivierung der Parksperre bewegbar und/oder bringbar ist.

Derartige Vorrichtungen mit Notbetätigungsmechanismen zur Betätigung, insbesondere Deaktivierung / Entriegelung einer im Getriebe eingelegten Parksperre sind vielfältig bekannt. So wird bei konventionellen bekannten Automatikgetrieben bekannter Kraftfahrzeuge teils auf komplexe und aufwendige Art und Weise dann beispielsweise der Schaltwählhebel von "P" nach "N" per Hand/manuell bewegt, um das Fahrzeug bewegen / verschieben zu können. Bei Vorrichtungen mit einer Parksperrenaktuatorik wird im Allgemeinen ein zusätzlicher Seilzugmechanismus zum Getriebe gelegt, wobei sich im Fahrzeuginnenraum dann der entsprechende Betätigungsmechanismus befindet, der im Allgemeinen aber dann durch ein weiteres zusätzliches Werkzeug zu bedienen ist.

So ist in der DE 10 2010 053 505 A1 eine Vorrichtung zur Betätigung einer Parksperre eines Getriebes eines Fahrzeugs mit einem Notbetätigungsmechanismus beschrieben, von der die Erfindung ausgeht, bei dem der Notbetätigungsmechanismus einen Bowdenzug aufweist. Über die Seele/über ein "inneres" Seilzugelement des Bowdenzuges kann unter der Zwischenschaltung eines Schwenkhebels und eines über den Schwenkhebel verschiebbaren Schaltelementes das Sperrelement zur Deaktivierung der Parksperre entsprechend bewegt werden, insbesondere über den Notbetätigungsmechanismus in eine Entriegelungsposition bewegt werden. Hierbei ist die "äußere" Seilzughülle des Bowdenzuges mit dem insbesondere elektrisch ansteuerbaren Parksperrenaktuator funktional wirksam verbunden, nicht jedoch das innere Seilzugelement bzw. die Seele des Bowdenzuges. Letzteres kann insbesondere damit unabhängig vom Parksperrenaktuator das Sperrelement in seine Entriegelungsposition zur Deaktivierung der Parksperre verschieben bzw. bewegen. Weiterhin ist diese Vorrichtung konstruktionstechnisch sehr aufwendig, insbesondere kann das Hebelsystem zwei unterschiedliche "Entriegelungspositionen" zur Realisierung einer Entriegelung des Sperrelementes einnehmen, so dass eine Mehrzahl von Komponenten zur Realisierung dieses Systems notwendig ist und das System daher entsprechend kostenintensiv ausgebildet ist.

In der DE 43 17 257 C1 wird eine Vorrichtung zur Betätigung einer Parksperre eines Getriebes eines Fahrzeugs beschrieben, bei dem ein Sperrelement über einen Parksperrenaktuator, insbesondere über ein Hydraulikgestänge und ein Kulissenstück mit spezifischer Kulisse ansteuerbar ist, um das Sperrelement in seine Entriegelungsposition zur Deaktivierung bzw. in seine Verriegelungsposition zur Aktivierung der Parksperre zu verbringen. Weiterhin ist ein Notbetätigungsmechanismus, insbesondere ein Seilzugelement vorgesehen, dass aber direkt an einer Betätigungsstange angreift bzw. mit der Betätigungsstange wirksam verbunden ist, um in einem Notfall/Notbetrieb durch die Ausübung einer Zugkraft am Seilzugelement dann das Sperrelement mit Hilfe der Betätigungsstange in seine Entriegelungsposition zur Deaktivierung der Parksperre zu verbringen.

Die DE 10 2016 223 551 A1 offenbart eine Vorrichtung zur Betätigung einer Parksperre eines Getriebes eines Fahrzeuges, wobei mit Hilfe des Parksperrenaktuators ein Sperrelement in eine Verriegelungsposition zur wirksamen Aktivierung der Parksperre des Getriebes oder in eine Entriegelungsposition zur wirksamen Deaktivierung der Parksperre des Getriebes bewegt wird bzw. bringbar ist. Dieser Parksperrenaktuator umfasst auch ein Notbetätigungsmechanismus damit das Sperrelement im Notfall mechanisch bzw. manuell bewegt werden kann, insbesondere die Parksperre deaktivierbar ist. Der Notbetätigungsmechanismus weist einen Seilzug auf.

Schließlich offenbart die EP 1 199 232 A2 eine Steuereinrichtung für die Parksperre eines Kraftfahrzeuges, wobei hier das Sperrelement in Abhängigkeit eines Hydraulikdrucks in einem Kolbenraum in eine eingerückte bzw. ausgerückte Position bewegbar ist.

Die im Stand der Technik bekannten Vorrichtungen, insbesondere auch die Vorrichtung zur Betätigung einer Parksperre eines Getriebes eines Fahrzeuges, von der die Erfindung ausgeht, sind noch nicht optimal ausgebildet. Einerseits sind diese Vorrichtungen konstruktionsmäßig sehr aufwendig und daher kostenintensiv, andererseits haben derartige Vorrichtungen den Nachteil, dass diese aufgrund der Mehrzahl der zueinander in Funktionszusammenhang stehenden Komponenten auch teils sehr wartungsintensiv sind. Schließlich kann insbesondere eine mit Hilfe der Notbetätigung deaktivierte Parksperre nur unter erheblichem zusätzlichem Aufwand wieder aktiviert werden. Die im Stand der Technik bekannten Vorrichtungen sind daher noch nicht optimal ausgebildet.

Der Erfindung liegt daher die Aufgabe zugrunde, die bekannte Vorrichtung, von der die Erfindung ausgeht, nun derart auszugestalten und weiterzubilden, dass diese konstruktionsmäßig vereinfacht ist, insbesondere die Kosten zur Herstellung verringert sind und/oder die Bedienung nochmals vereinfacht ist.

Die zuvor aufgezeigte Aufgabe ist nun zunächst durch die Merkmale des Patentanspruches 1 gelöst.

Vorteilhafte Ausgestaltungen der vorliegenden Erfindung sind in den abhängigen Ansprüchen dargelegt.

Weiterhin kann der Antriebsmechanismus ein mit dem Schubstangenelement zumindest teilweise funktional wirksam gekoppeltes Widerlagerelement aufweisen. Insbesondere ist das Widerlagerelement einerseits über mindestens einen Anschlag und andererseits über ein Federelement mit dem Schubstangenelement gekoppelt.

Erfindungsgemäß ist das Seilzugelement indirekt mit dem Schubstangenelement wirksam verbunden. Dadurch, dass aber das Seilzugelement nun mit dem Antriebsmechanismus des Parksperrenaktuators funktional zusammenwirkt und hierüber dann auch das Sperrelement in die Entriegelungsposition bewegbar und/oder bringbar ist, ist einerseits die Bedienung vereinfacht, andererseits ist die Anzahl der hierfür notwendigen Komponenten zur konstruktionstechnischen Realisierung und sind die damit einhergehenden Kosten verringert, dies darf im Nachfolgenden noch näher erläutert werden:
Der Parksperrenaktuator weist einen Antriebsmechanismus zur Bewegung und/oder
Positionierung des Sperrelementes auf. Der Antriebsmechanismus kann ein mit dem Schubstangenelement wirksam gekoppeltes Widerlagerelement umfassen.

Teilweise sind das Schubstangenelement und das Widerlagerelement relativ zueinander bewegbar. Hierfür weist das Widerlagerelement eine Ausnehmung auf, innerhalb der das Schubstangenelement bewegbar gelagert ist. Insbesondere ist das Widerlagerelement einerseits über mindestens einen Anschlag und andererseits über ein Federelement mit dem Schubstangenelement gekoppelt, wobei im Normalbetrieb das Widerlagerelement insbesondere durch einen elektrischen Stellantrieb und/oder Elektromotor bewegbar angetrieben wird, um das Schubstangenelement zu verschieben / bewegen, was im Folgenden noch näher erläutert werden darf. Dadurch, dass der Notbetätigungsmechanismus nun zumindest teilweise in den Parksperrenaktuator "integriert" ist, ist die Anzahl der erforderlichen konstruktionstechnischen Komponenten sowie des Bauraumes - im Vergleich zum bisherigen bekannten Stand der Technikreduziert.

Der Parksperrenaktuator weist ein Zug-Druck-Betätigungsseil, insbesondere einen Bowdenzug auf. Das Zug-Druck-Betätigungsseil ist mit dem Schubstangenelement, insbesondere mit einem ersten Endbereich des Schubstangenelementes direkt oder indirekt wirksam gekoppelt. Dadurch kann das Zug-Druck-Betätigungsseil entsprechend bewegt bzw. über das Schubstangenelement mit verschoben werden und so dann das Sperrelement im Getriebe in seine Entriegelungsposition bzw. in seine Verriegelungsposition bewegt werden. Über das Zug-Druck-Betätigungsseil ist im Endeffekt dann das Sperrelement im Getriebe betätigbar.

Erfindungsgemäß ist das Seilzugelement indirekt mit dem zweiten Endbereich des Schubstangenelementes wirksam gekoppelt, wobei funktional zwischen dem zweiten Endbereich des Schubstangenelementes und dem Seilzugelement ein Betätigungshebel verschwenkbar angeordnet ist. Hierdurch kann insbesondere der Verlauf / die Anordnung des Seilzugelementes, das an einem Ende einen Handgriff aufweist, insbesondere also die Position des Handgriffes für einen Benutzer optimiert werden, insbesondere kann im Wesentlichen das Seilzugelement beliebig versetzt zum Zug-Druck-Betätigungsseil verlaufen.

Gemäß der Erfindung, ist Notbetätigungsmechanismus, hier das Seilzugelement nach Art eines Flaschenzuges ausgeführt und/oder ausgebildet. Hierbei ist das dem Handgriff des Seilzugelementes gegenüberliegende Ende des Seilzuges mit dem Gehäuse des Parksperrenaktuators fest verbunden, wobei an dem dem ersten Ende gegenüberliegenden Endbereich des Betätigungshebels ein Fortsatz vorgesehen ist, um den das Seilzugelement entsprechend geführt ist. Hierdurch wird ein Flaschenzug-Prinzip realisiert, so dass der Benutzer an dem Handariff des Seilzuaes im Endeffekt nur mit halber Kraft ziehen muss (als sonst notwendig), um den Betätigungshebel entsprechend zu verschwenken. Insbesondere kann das Seilzugelement bandähnlich ausgeführt sein und in den Fortsatz eingesteckt und/oder eingefädelt werden, was die Montage vereinfacht. Dies darf im Folgenden noch näher erläutert werden.

Die zuvor genannten Komponenten sind insbesondere raum- und/oder platzsparend in einem Aktuatorgehäuse angeordnet bzw. unterbringbar.

Von besonderem weiteren Vorteil ist nun, dass bei der besonders bevorzugten Ausführungsform nun mindestens ein Federelement vorgesehen und/oder vorhanden ist, wobei das Federelement so angeordnet und/oder ausgebildet ist, so dass das Schubstangenelement über das Federelement kraftbeaufschlagt ist. Bei einer durch die entsprechende Kraftbeaufschlagung des Federelementes und/oder in Richtung dieser Kraftbeaufschlagung verursachten Bewegung des Schubstangenelementes ist dann das Sperrelement in seine Verriegelungsposition bewegbar und/oder bringbar. Dies bedeutet, dass bei der Betätigung des Seilzugelementes mit einer Zugkraft, insbesondere beim Ziehen an einem Handgriff des Seilzugelementes, der Betätigungshebel derart verschwenkbar ist, so dass dann sein wulstförmiger Bereich das Schubstangenelement entgegen der Federkraft des Federelementes bewegt wird, wobei hierüber dann das Sperrelement in seine Entriegelungsposition bewegbar und/oder bringbar ist. Einfach ausgedrückt, bei Ausübung einer Zugkraft am Seilzugelement wird das Sperrelement in seine Entriegelungsposition bewegt bzw. verbracht, weil das Schubstangenelement entgegen der Kraftbeaufschlagung der Federkraft verschoben wird und mit seinem ersten Endbereich das Zug-Druck-Betätigungsseil entsprechend mitbewegt bzw. betätigt, worüber dann das Sperrelement in seine Entriegelungsposition verbracht wird.

Die Anordnung des Federelementes hat nun aber den Vorteil, dass nach dem Aufbringen der Zugkraft am Seilzugelement und nach der entsprechenden Bewegung des Schubstangenelementes, nämlich dann wenn keine Zugkraft mehr auf das Seilzugelement ausgeübt wird, insbesondere also wenn der Handgriff des Seilzugelementes vom Benutzer losgelassen wird, dann aufgrund der vom Federelement ausgeübten Kraftbeaufschlagung das Schubstangenelement in Richtung der Kraftbeaufschlagung des Federelementes verschoben und/oder (zurück) bewegt wird, so dass das Sperrelement in seine Verriegelungsposition zurück bewegbar und/oder bringbar ist. Dies hat den Vorteil, dass, wenn der Handgriff des Seilzugelementes vom Benutzer losgelassen wird, das Sperrelement mit Hilfe der ausgeübten Federkraft automatisch in seine Verriegelungsposition wieder zurück bewegt wird. Damit ist beispielsweise das kurzzeitige Bewegen eines Fahrzeugs bspw. auf dem Band der Produktionshalle eines Automobilherstellers auf einfache Weise ermöglicht, nämlich mit einem "Pull" das Sperrelement in die Entriegelungsposition und mit einem "Loslassen" das Sperrelement in die Verriegelungsposition automatisch zurück bewegbar.

Von weiterem Vorteil bei der bevorzugten Ausführung ist nun, dass ein Betätigungsknopf zur lösbaren Fixierung des Betätigungshebels vorgesehen und/oder vorhanden ist. Nach und/oder bei der entsprechenden Betätigung des Notbetätigungsmechanismus, also nachdem an dem Seilzugelement eine Zugkraft ausgeübt worden ist, ist der Betätigungshebel in seiner das Schubstangenelement entgegen der Federkraft verschobenen Position, lösbar fixierbar. Der Betätigungshebel ist also insbesondere genau in der Position fixierbar, wenn auch das Sperrelement seine Entriegelungsposition aufweist. Über die dann fixierte Position des Betätigungshebels ist dann auch das Schubstangenelement entsprechend in seiner Positionierung fixiert, so dass das Sperrelement dann über das Schubstangenelement in die Entriegelungsposition bewegt ist und hierin auch verbleibt, weil ja der Betätigungshebel entsprechend fixiert ist. Die Fixierung des Betätigungshebels in der zuvor genannten Position wird insbesondere dann realisiert, nachdem am Seilzugelement gezogen worden ist, ohne das Seilzugelement aber vorher loszulassen. Der Betätigungsknopf weist hierzu insbesondere einen stiftförmigen Bereich auf, wobei der stiftförmige Bereich in eine Ausnehmung des Betätigungshebels zur Fixierung des Betätigungshebels einführbar ist. Hierbei ist der Betätigungsknopf in einer Ausnehmung des Gehäuses des Parksperrenaktuators gelagert bzw. bewegbar, insbesondere entlang seiner Längsachse bewegbar geführt, insbesondere entgegen einer Federkraft drückbar, nämlich in eine Ausnehmung des Betätigungshebels. In dieser Position blockiert der Betätigungsknopf, insbesondere der vordere Endbereich des stiftförmigen Bereiches dann ein Rückschwenken des Betätigungshebels, so dass das Sperrelement in seine Entriegelungsposition über das Schubstangenelement bewegt ist.

Soll nun diese zuvor genannte Fixierung des Betätigungshebels wieder gelöst werden, wird insbesondere nochmal eine Zugkraft am Seilzugelement aufgebracht, wodurch die Blockierung/Rastierung zwischen dem Betätigungsknopf und dem Betätigungshebel kurzfristig aufgehoben wird und dann der Betätigungsknopf bzw. der stiftförmige Bereich aufgrund der anliegenden Federkraft mit der Ausnehmung des Betätigungshebels wieder außer Eingriff kommt. Wenn danach dann der Handgriff des Seilzugelementes losgelassen wird, kann sich der Betätigungshebel frei bewegen und wird über das über das erste Federelement kraftbeaufschlagte Schubstangenelement entsprechend zurück verschwenkt, wobei dann zugleich das Sperrelement wieder in seine Verriegelungsposition überführt wird.

Nochmals anders ausgedrückt: Nach einer Fixierung des Betätigungshebels durch den Betätigungsknopf und bei einer dann auf das Seilzugelement ausgeübten, insbesondere wiederholten, Zugkraft kommt der stiftförmige Bereich des Betätigungsknopfes mit der Ausnehmung des Betätigungshebels aufgrund der wirkenden Federkraft (des "zweiten" Federelementes des Betätigungsknopfes) automatisch außer Eingriff, so dass über das Seilzugelement auch die zuvor fixierte Position des Betätigungshebels wieder lösbar ist, insbesondere auch das Sperrelement dann wieder in seine Verriegelungsposition zurück bewegbar und/oder bringbar ist.

Mit dem so konstruktiv ausgestalteten und/oder realisierten Notbetätigungsmechanismus ist daher eine einfache Handhabung eines Notbetätigungsmechanismus realisiert, insbesondere ein "Pull-Pull-Prinzip" mit zusätzlicher Fixierungsfunktion realisiert.

Mit Hilfe des (ersten) Federelementes zur Kraftbeaufschlagung des Schubstangenelementes wird bei einem Stromausfall, insbesondere dann wenn das Widerlagerelement in seiner Position verharrt und/oder blockiert ist, dann insbesondere immer automatisch auch das Sperrelement in seine Verriegelungsposition bewegt (nur dann nicht, wenn der Betätigungshebel über den Betätigungsknopf fixiert wird oder am Seilzugelement eine entsprechende Zugkraft entgegenwirkend zur Federkraft des Federelementes anliegt). So ist bei einem Stromausfall zumindest immer sichergestellt, dass die Parksperre aktiviert ist.

Der stiftförmige Bereich des Betätigungsknopfes wird in die Ausnehmung des Betätigungshebels hineingedrückt, während das Seilzugelement gezogen gehalten wird. Aufgrund des stiftförmigen Bereiches des Betätigungsknopfes und der Ausnehmung des Betätigungshebels wird ein Kraft- und/oder Formschluss realisiert und das Sperrelement wird hierüber (im Endeffekt) in seiner Entriegelungsposition gehalten, insbesondere solange der Verriegelungsknopf hineingedrückt bleibt. Hierbei wird der zuvor genannte Kraft- und/oder Formschluss insbesondere aufgrund von bestehender Reibung erhalten. Bei dem erneuten Ziehen am Seilzugelement (Pull-Pull-Funktion) wird die Reibung und dadurch auch der Kraft- und/oder Formschluss wieder aufgehoben und der Betätigungshebel wieder "freigegeben". Durch die Rückstellfederkraft des ersten Federelementes und die hieraus resultierende Bewegung des Schubstangenelementes und des Zug-Druck-Betätigungsseiles wird das Sperrelement wieder in seine Verriegelungsposition bewegt, insbesondere die Parksperre daher wieder aktiviert.

Mit der Vorrichtung werden mehrere Vorteile erzielt, insbesondere ist kein zusätzliches Werkzeug erforderlich, um den Notbetätigungsmechanismus durch einen Benutzer zu bedienen. Von besonderem Vorteil ist, dass die Mechanik des Notbetätigungsmechanismus nahezu vollständig in den Parksperrenaktuator integriert ist, also keine zusätzliche Schnittstelle zur Getriebemechanik mehr erforderlich ist. Denkbar ist auch, dass zusätzlich das System so ausgelegt ist, dass die realisierte Fixierung des Betätigungshebels, also insbesondere auch die Position des Sperrelementes in seiner Entriegelungsposition elektromechanisch wieder aufhebbar ist. Damit ist ein einfacher Betrieb und eine einfache Konstruktion realisierbar, wodurch auch die Kosten minimiert sind.

Im Folgenden darf eine sehr bevorzugte Ausführungsform der Erfindung anhand der nachfolgenden Beschreibung und der dazugehörenden Zeichnung näher erläutert werden. In der Zeichnung zeigt:

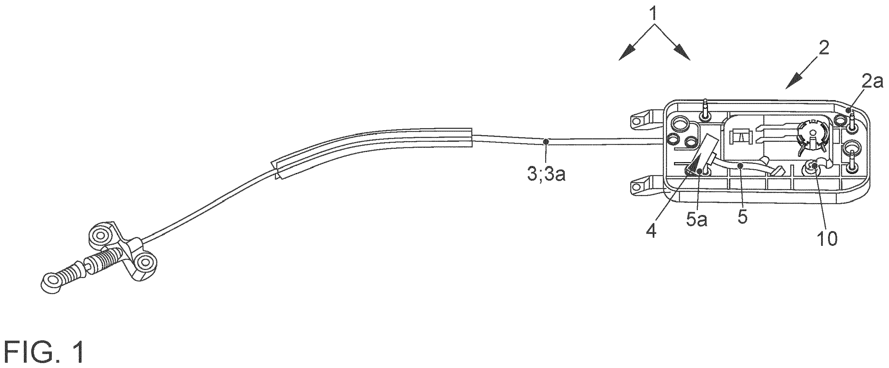

Fig. 1 in einer sehr vereinfachten schematischen Darstellung eine Gesamtdarstellung der erfindungsgemäßen Vorrichtung mit dem Notbetätigungsmechanismus, insbesondere für den Notbetrieb und/oder die Deaktivierung der Parksperre im Getriebe eines Kraftfahrzeuges, sowie auch das insbesondere für den Normalbetrieb mit dem Parksperrenaktuator wirksam verbundene Zug-Druck-Betätigungsseil, insbesondere einen Bowdenzug, zur Betätigung eines Sperrelementes im Getriebe eines Fahrzeuges,

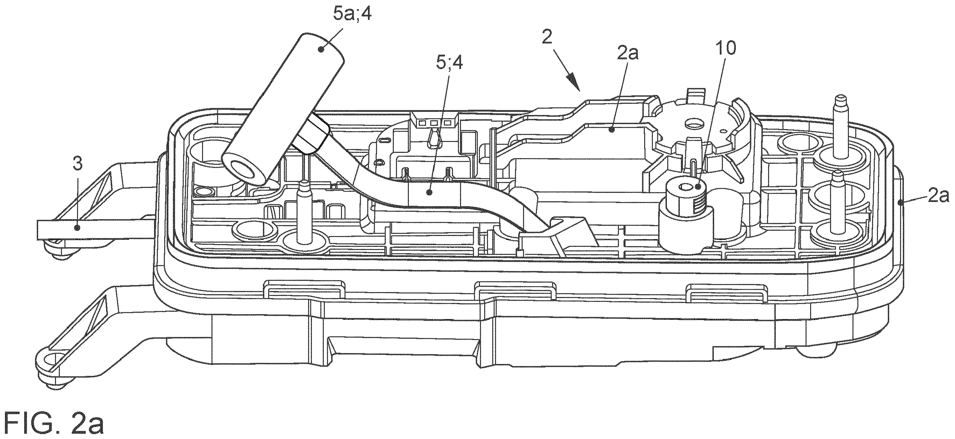

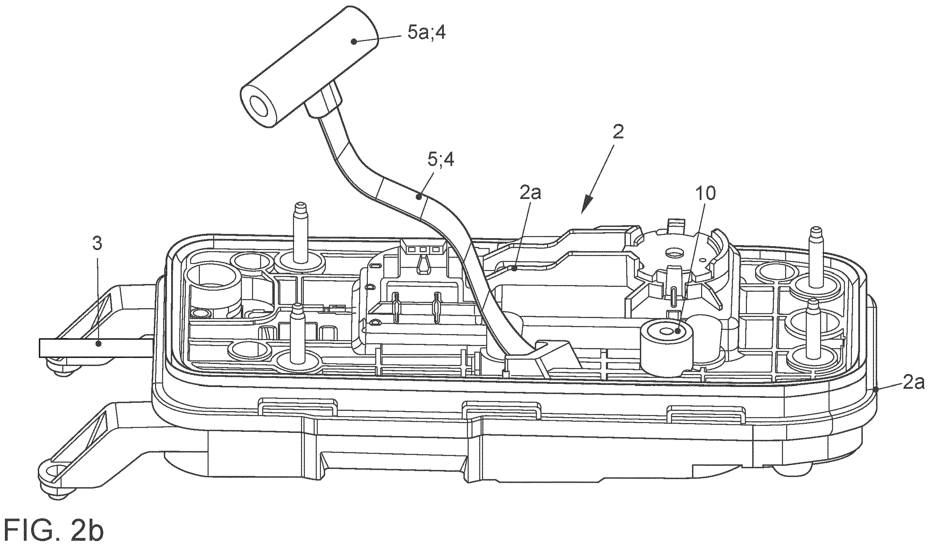

Fig. 2a,b die erfindungsgemäße Vorrichtung aus Fig. 1 in vergrößerter Darstellung, insbesondere mit dem Gehäuse des Parksperrenaktuators bei unbetätigten Notbetätigungsmechanismus (vgl. Fig. 2a) und bei betätigten Notbetätigungsmechanismus mit über den Betätigungsknopf fixiertem Betätigungshebel (vgl. Fig. 2b),

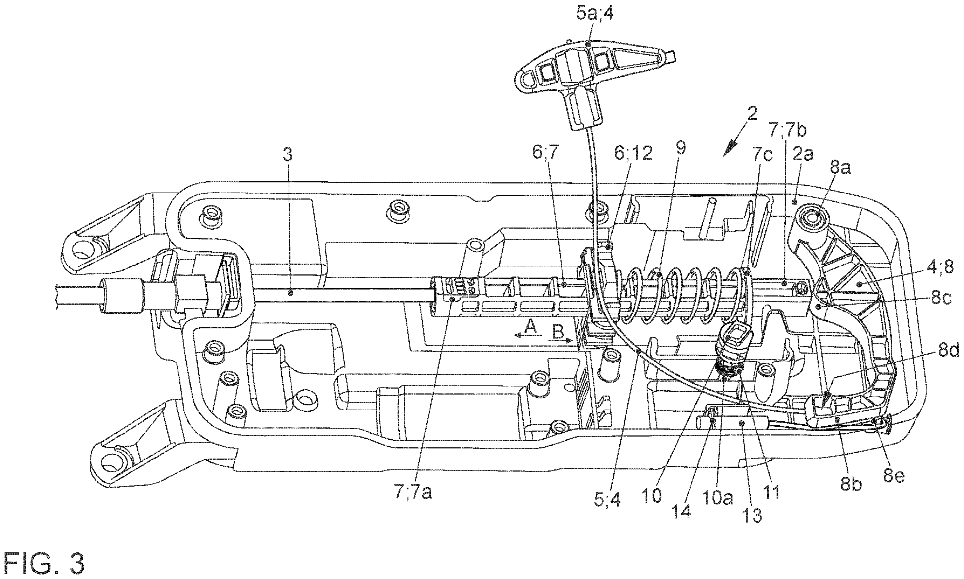

Fig. 3 in schematischer Darstellung den Parksperrenaktuator aus Fig. 2, dargestellt jedoch ohne die obere Gehäusehälfte und ohne die Darstellung des elektromotorischen Antriebes, jedoch mit der Darstellung des Antriebsmechanismus zur Betätigung des Sperrelementes, nämlich mit der Darstellung eines Schubstangenelementes und eines Widerlagerelementes sowie Federelementes, wobei der Notbetätigungsmechanismus hier nicht betätigt ist,

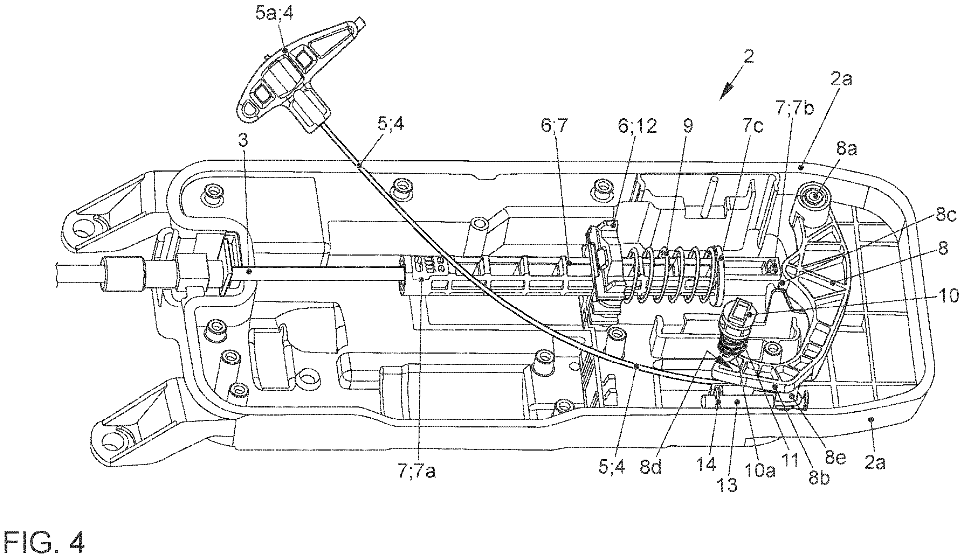

Fig. 4 die erfindungsgemäße Vorrichtung aus Fig. 2, insbesondere den Parksperrenaktuator ohne den oberen Gehäuseteil und ohne die Darstellung des elektromotorischen Antriebes, jedoch mit der Darstellung des Antriebsmechanismus zur Betätigung des Sperrelementes, nämlich mit der Darstellung des Schubstangenelementes und des Widerlagerelementes sowie Federelementes, wobei der Notbetätigungsmechanismus betätigt ist, und
Fig. 5
   in schematischer Darstellung die erfindungsgemäße Vorrichtung, insbesondere den Parksperrenaktuator ohne das obere Gehäuseteil und ohne die Darstellung des elektromotorischen Antriebes, jedoch mit der Darstellung des Antriebsmechanismus zur Betätigung des Sperrelementes, nämlich mit der Darstellung des Schubstangenelementes und des Widerlagerelementes sowie des Federelementes, mit bereits betätigten Notbetätigungsmechanismus, wobei hier der Notbetätigungsmechanismus in dieser Position lösbar fixiert ist, insbesondere die Parksperre hier dauerhaft deaktiviert ist.

Die Fig. 1 bis 5 zeigen zumindest teilweise eine Vorrichtung 1 zur Betätigung einer hier nicht im Einzelnen dargestellten Parksperre eines hier nicht im Einzelnen dargestellten Getriebes eines hier nicht im Einzelnen dargestellten Fahrzeuges. Die Vorrichtung 1 dient insbesondere zur Betätigung einer Parksperre eines Automatikgetriebes eines Kraftfahrzeuges.

In den Fig. 1 bis 5 ist insbesondere der Parksperrenaktuator 2 dargestellt, der ein Gehäuse 2a aufweist. In den Fig. 3 bis 5 ist insbesondere der obere Gehäuseteil des Gehäuses 2a nicht dargestellt, damit die Funktionsweise der Komponenten sichtbar dargestellt ist.

Mit Hilfe des Parksperrenaktuators 2 wird über ein Zug-Druck-Betätigungsseil 3, insbesondere über einen Bowdenzug 3a, ein nicht dargestelltes Sperrelement in eine Verriegelungsposition zur wirksamen Aktivierung der Parksperre des Getriebes oder das Sperrelement in eine Entriegelungsposition zur wirksamen Deaktivierung der Parksperre des Getriebes bewegt und/oder entsprechend verbracht. Nochmal anders ausgedrückt, mit Hilfe des Zug-Druck-Betätigungsseiles 3 ist eine hier nicht im Einzelnen dargestellte Parksperre im Getriebe eines Kraftfahrzeuges aktivierbar / deaktivierbar bzw. entsprechend betätigbar.

Weiterhin ist ein Notbetätigungsmechanismus 4 vorgesehen und/oder vorhanden, mit dessen Hilfe - bei entsprechender Betätigung - das Sperrelement in eine Entriegelungsposition zur Deaktivierung der Parksperre bewegbar und/oder bringbar ist. Dies ist insbesondere dann notwendig und/oder sinnvoll, wenn eine elektrische Ansteuerung und/oder der elektrische Betrieb des Parksperrenaktuators 2 ausgefallen ist und/oder dann wenn ein Benutzer eine Bewegung des Fahrzeugs - bei noch aktivierter Parksperre - realisieren möchte, also wenn der Benutzer die aktivierte Parksperre manuell deaktivieren möchte.

Der Notbetätigungsmechanismus 4 weist mindestens ein Seilzugelement 5 auf, wobei wenn der Notbetätigungsmechanismus 4 von einem Benutzer betätigt wird und am Seilzugelement 5 eine Zugkraft ausgeübt wird, dann das Sperrelement in seine Entriegelungsposition zur Deaktivierung der Parksperre bewegbar und/oder bringbar ist.

Das Seilzugelement 5 ist funktional wirksam derart mit dem Antriebsmechanismus 6 des Parksperrenaktuators 2 verbunden, so dass bei entsprechender Betätigung des Seilzugelementes 5 dann mit Hilfe des Antriebsmechanismus 6 des Parksperrenaktuators 2 das Sperrelement in die Entriegelungsposition bewegbar und/oder bringbar ist. Da hier nun der Notbetätigungsmechanismus 4 und der Parksperrenaktuator 2 in einer Art und Weise funktional miteinander wirksam gekoppelt sind, so dass über den auch im Normalbetrieb verwendeten Antriebsmechanismus 6 des Parksperrenaktuators 2 bei Betätigung des Notbetätigungsmechanismus 4 auch nun das Sperrelement in die Entriegelungsposition bringbar ist, kann die Anzahl der Komponenten zur Realisierung der Vorrichtung 1 zur Betätigung einer Parksperre, insbesondere auch die Anzahl der Komponenten zur Realisierung eines Notbetätigungsmechanismus 4 reduziert werden. Entsprechende Kosten werden dadurch eingespart, weitere Vorteile werden erzielt, die im Folgenden noch näher erläutert werden dürfen:
In den Fig. 1, 2a und 2b ist der Parksperrenaktuator 2 im Wesentlichen mit vollständigen Gehäuse 2a dargestellt. In den Fig. 3 bis 5 ist der Parksperrenaktuator 2 in vergrößerter Darstellung, jedoch ohne die obere Gehäusehälfte dargestellt, so dass die jeweiligen Komponenten innerhalb des Gehäuses 2a ersichtlich sind. Hierbei ist der Antriebsmechanismus 6 des Parksperrenaktuators 2 dargestellt, jedoch ist explizit kein motorischer, insbesondere kein elektromotorischer Antrieb dargestellt. Der Antriebsmechanismus 6 des Parksperrenaktuators 2 weist zur Bewegung und/oder Positionierung des Sperrelementes ein bewegbar angeordnetes Schubstangenelement 7 auf. Das Schubstangenelement 7 ist bewegbar im Gehäuse 2a gelagert. Weiterhin weist der Antriebsmechanismus 6 einen Widerlagerelement 12 auf, das ebenfalls bewegbar gelagert ist. Insbesondere der hier nicht dargestellte elektromotorische Antrieb bewegt direkt oder indirekt das Widerlagerelement 12. Durch diesen nicht dargestellten elektromotorischen Antrieb ist das Widerlagerelement 12 insbesondere entlang der Längsachse des Schubstangenelementes 7 teilweise bewegbar. Das Widerlagerelement 12 weist eine nicht näher bezeichnete Ausnehmung auf, durch die sich das Schubstangenelement 7 hindurch erstreckt, so wie aus den Fig. 3 bis 5 ersichtlich, und in der das Schubstangenelement 7 bewegbar gelagert ist. Der linke erste Endbereich 7a des Schubstangenelementes 7 ist mit dem Zug-Druck-Betätigungsseil 3 wirksam verbunden. Über eine entsprechende Bewegung des Schubstangenelementes 7 ist daher das Zug-Druck-Betätigungsseil 3 betätigbar und das Sperrelement im Getriebe entsprechend bewegbar und/oder positionierbar, wie bereits oben beschrieben. Die im Normalbetrieb bei der elektromotorischen Ansteuerung des Parksperrenaktuators 2 stattfindenden Bewegungen des Widerlagerelementes 12 sind insbesondere in der Fig. 3 durch die dortigen Pfeile A und B dargestellt. Das Widerlagerelement 12 kann daher in Richtung der Längsachse des Schubstangenelementes 7 nach links oder rechts bewegt werden.

Das Widerlagerelement 12 ist nun zumindest teilweise funktional wirksam mit dem Schubstangenelement 7 gekoppelt. Einerseits ist das Widerlagerelement 12 über mindestens einen hier nicht näher bezeichneten und nicht in den Figuren erkennbaren Anschlag mit dem Schubstangenelement 7 koppelbar und andererseits über das in den Fig. 3 bis 5 dargestellte Federelement mit dem Schubstangenelement 7 gekoppelt.

Im Normalbetrieb des Parksperrenaktuators 2, also im elektrischen Betrieb, wird das Widerlagerelement 12 zur Verbringung des Sperrelementes in seine Entriegelungsposition in Fig. 3 nach links gemäß dem Pfeil A verfahren und nimmt über den entsprechenden Anschlag das Schubstangenelement 7 hier dann nach links mit. Hierdurch wird das Sperrelement in seine Entriegelungsposition verbracht, denn das Widerlagerelement 12 bewegt auch dann das Schubstangenelement 7 nach links. Weiterhin wird im Normalbetrieb des Parksperrenaktuators 2 zur Verbringung des Sperrelementes in seine Verriegelungsposition das Widerlagerelement in Fig. 3 nach rechts gemäß dem Pfeil B verschoben. Das Widerlagerelement 12 wird dann entgegen der Federkraft des Federelementes 9 nach rechts bewegt, wobei über die Kopplung des Federelementes 9 mit dem Schubstangenelement 7, weil das in Fig. 3 dargestellte rechte Ende des Federelementes 9 an einem Absatz 7c des Schubstangenelementes 7 anliegt, dann ebenfalls über die entsprechende Kraftbeaufschlagung dann das Schubstangenelement 7 nach rechts verschoben wird. Hierdurch wird dann das Sperrelement mit Hilfe des entsprechend mitbewegten Zug-Druck-Betätigungsseiles 3 in seine Verriegelungsposition überführt bzw. bewegt.

Der elektrisch betreibbare Parksperrenaktuator 2 weist daher den Antriebsmechanismus 6 zur Bewegung und/oder Positionierung des Sperrelementes und der Antriebsmechanismus 6 das mit dem Widerlagerelement 12 wirksam gekoppelt und bewegbar angeordnete Schubstangenelement 7 auf.

Wie insbesondere die Fig. 1 auch deutlich macht ist für die Betätigung des Sperrelementes ein Zug-Druck-Betätigungsseil 3, insbesondere ein Bowdenzug 3a vorgesehen, wobei das Zug-Druck-Betätigungsseil 3 insbesondere mit einem ersten Endbereich 7a, nämlich hier mit dem in den Figuren links dargestellten Endbereich 7a des Schubstangenelementes 7 direkt oder indirekt, hier insbesondere direkt, wirksam gekoppelt ist. Anders ausgedrückt, das Schubstangenelement 7, wie hier in den Fig. 3 bis 5 dargestellt, bewegt das Zug-Druck-Betätigungsseil 3 entweder nach links zur Deaktivierung der Parksperre oder nach rechts zur Aktivierung der Parksperre. Über die entsprechende Bewegung des Schubstangenelementes 7 wird das Sperrelement in die Entriegelungs- bzw. Verriegelungsposition entsprechend mit bewegt. Im Folgenden darf insbesondere nun die Funktionsweise des Notbetätigungsmechanismus 4 näher erläutert werden:
Wie nun insbesondere aus den Fig. 3 bis 5 deutlich wird, ist das Seilzugelement 5 hier indirekt mit dem Schubstangenelement 7, mit einem zweiten Endbereich 7b des Schubstangenelementes 7 wirksam gekoppelt und/oder verbunden. Hierzu ist funktional zwischen dem zweiten Endbereich 7b des Schubstangenelementes 7 und dem Seilzugelement 5 ein Betätigungshebel 8 verschwenkbar angeordnet. Der Betätigungshebel 8 ist in den Fig. 3 bis 5 rechts in dem hier offen dargestellten Gehäuse 2a des Parksperrenaktuators 2 erkennbar.

Die Fig. 3 bis 5 zeigen, dass ein erstes Ende 8a des Betätigungshebels 8 gelenkig verschwenkbar angelenkt ist und ein zweites Ende 8b bzw. ein dem ersten Ende 8a gegenüberliegender Endbereich des Betätigungshebels 8 mit dem Seilzugelement 5 wirksam verbunden ist. Weiterhin weist der Betätigungshebel 8 insbesondere einen wulstförmigen Abschnitt 8c zur Kontaktierung des zweiten Endbereiches 7b des Schubstangenelementes 7 auf.

Die Fig. 3 bis 5 machen insbesondere deutlich, dass der wulstförmige Abschnitt 8c des Betätigungshebels 8 im Wesentlichen insbesondere immer permanent bzw. auch bei einer Verschwenkung mit dem zweiten Endbereich 7b des Schubstangenelementes 7 in Kontakt steht.

Das Federelement 9 ist nun so angeordnet und/oder ausgebildet, dass das Schubstangenelement 7 über das Federelement 9 derart kraftbeaufschlagt ist, so dass das Sperrelement bei einer in Richtung der Kraftbeaufschlagung des Federelementes 9 verursachten Bewegung des Schubstangenelementes 7 dann in seine Verriegelungsposition bewegbar und/oder bringbar ist. Anders ausgedrückt, wird bzw. ist das Schubstangenelement 7, wie in Fig. 3 dargestellt, nach rechts verschoben, so befindet sich das Sperrelement in dieser hier in Fig. 3 dargestellten Position dann in seiner Verriegelungsposition, die Parksperre ist aktiviert. Das Federelement 9 ist hierbei zwischen dem Widerlagerelement 12 des Gehäuses 2a und dem Absatz 7c des Schubstangenelementes 7 angeordnet. Das Widerlagerelement 12 weist eine nicht näher bezeichnete Ausnehmung zur bewegbaren Lagerung des Schubstangenelementes 7 auf, wie bereits erläutert. Die Fig. 3 bis 5 machen insbesondere auch deutlich, dass das Widerlagerelement 12 auf der einen Seite mit dem linken Ende des Federelementes 9 in Kontakt ist, wobei, was in den Figuren nicht explizit dargestellt ist, insbesondere auf der anderen Seite des Widerlagerelementes 12 das Widerlagerelement 12 mit einem auf dem Schubstangenelement 7 angeordneten Anschlag wirksam in Kontakt bringbar ist.

Wird nun, wie in der Fig. 4 dargestellt das Seilzugelement 5 des Notbetätigungsmechanismus 4 mit einer Zugkraft betätigt, insbesondere wenn an einem Handgriff 5a des Seilzugelementes 5 ein Benutzer zieht bzw. den Handgriff 5a entsprechend betätigt und zu sich zieht, dann wird der Betätigungshebel 8 im Uhrzeigersinn um sein erstes Ende 8a entsprechend verschwenkt. Sein wulstförmiger Bereich 8c verschiebt das Schubstangenelement 7 entgegen der Federkraft des Federelementes 9, wobei hierüber dann das Sperrelement in seine Entriegelungsposition bewegbar und/oder bringbar ist. Anders ausgedrückt Fig. 4 zeigt den Zustand der deaktivierten Parksperre. Für diesen Fall, wenn das Schubstangenelement 7 nach links verschoben wird, kommt der Anschlag des Schubstangenelementes 7 insbesondere auch außer Kontakt mit dem Widerlagerelement 12. Das Widerlagerelement 12 verbleibt dann insbesondere in seiner in Fig. 3 dargestellten Position. Oder nochmal anders ausgedrückt, eine Verschiebung des Schubstangenelementes 7 entgegen der Federkraft des Federelementes 9, insbesondere aus der in Fig. 3 gezeigten Stellung weiter nach links, ist für das Schubstangenelement 7 problemlos ermöglicht. Hierdurch wird die Parksperre dann im Notbetrieb entsprechend auch deaktiviert.

Wird nun der Handgriff 5a des Seilzugelementes 5, so wie in Fig. 4 im gezogenen Zustand dargestellt wieder losgelassen, wird also nach dem Aufbringen der Zugkraft am Seilzugelement 5 und nach der entsprechenden Bewegung des Schubstangenelementes 7 (von Fig. 3 nach Fig. 4) nun keine Zugkraft mehr auf das Seilzugelement 5 ausgeübt, insbesondere dann wenn der Handgriff 5a des Seilzugelementes 5 losgelassen wird, übt die Federkraft des Federelementes 9 eine Kraftbeaufschlagung auf das Schubstangenelement 7 in entsprechender Richtung aus, so dass das Schubstangenelement 7 aufgrund der Kraftbeaufschlagung des Federelementes 9 von links nach rechts verschoben wird, nämlich in die in Fig. 3 dargestellte Position zurück bewegt wird. Anders ausgedrückt, der Betätigungshebel 8 schwenkt von der in Fig. 4 dargestellten Position entgegen dem Uhrzeigersinn in die in Fig. 3 dargestellte Position. Dies hat zum Effekt, dass das Sperrelement wieder in seine in Fig. 3 dargestellte Verriegelungsposition zurückbewegt wird und/oder entsprechend verbracht ist. Anders ausgedrückt, wird der Handgriff 5a wieder losgelassen nachdem der Notbetätigungsmechanismus 4 betätigt bzw. am Seilzugelement 5 gezogen worden ist, wird die Parksperre automatisch wieder aktiviert.

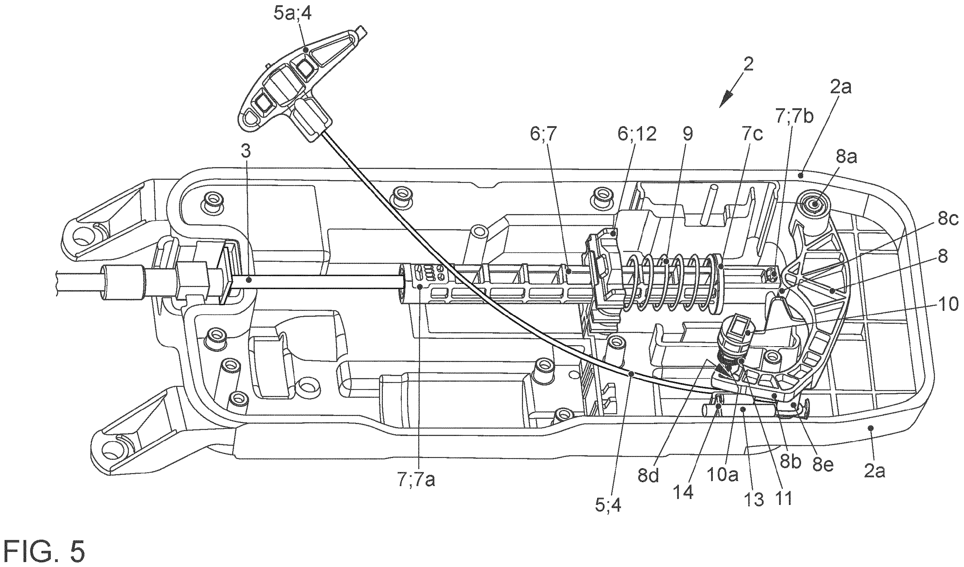

In einer sehr bevorzugten hier dargestellten Ausführungsform der Vorrichtung 1 kann nun nach der entsprechenden Betätigung des Notbetätigungsmechanismus 4 der Betätigungshebel 8 in seiner das Schubstangenelement 7 entgegen der Federkraft verschobenen Position, also wenn das Sperrelement seine Entriegelungsposition aufweist, lösbar fixiert werden. Dies ist in den Fig. 4 und 5 im Gesamtzusammenhang dargestellt. Wird der Betätigungshebel 8 entsprechend lösbar fixiert, ist damit auch das Schubstangenelement 7 in einer entsprechenden Positionierung fixiert, so dass das Sperrelement in die Entriegelungsposition bewegt ist und auch hierin verbleibt. Zur lösbaren Fixierung des Betätigungshebels 8 ist nun ein Betätigungsknopf 10 vorgesehen und/oder vorhanden.

Wie insbesondere aus den Fig. 2 bis 5 deutlich wird, weist der Betätigungsknopf 10 einen stiftförmigen Bereich 10a auf, wobei der stiftförmige Bereich 10a in eine Ausnehmung 8d des Betätigungshebels 8 zur Fixierung des Betätigungshebels 8 einführbar ist.

In der Fig. 4 ist die nicht fixierte Stellung des Betätigungshebels 8 dargestellt, der Betätigungsknopf 10 ist, insbesondere auch entgegen einer über ein weiteres (zweites) Federelement 11 ausgeübten Federkraft nach oben verschoben. Hierbei ist der Betätigungsknopf 10 in der insbesondere oberen Gehäusehälfte des Gehäuses 2a des Parksperrenaktuators 2 entsprechend gelagert. Der stiftförmige Bereich 10a des Betätigungsknopfes 10 ist entgegen der Federkraft des weiteren Federelementes 11 in die Ausnehmung 8d des Betätigungshebels 8 zumindest teilweise einführbar, so wie in Fig. 5 gezeigt, wenn der Notbetätigungsmechanismus 4 entsprechend betätigt ist und der Betätigungshebel 8, wie in Fig. 5 dargestellt im Uhrzeigersinn entsprechend in die dort dargestellte Position verschwenkt worden ist.

Fig. 5 zeigt die lösbare Fixierung des Betätigungshebels 8 durch den Betätigungsknopf 10. Wenn nun, bei der Darstellung in Fig. 5, eine auf das Seilzugelement 5 ausgeübte Zugkraft, insbesondere eine nun wiederholte Zugkraft ausgeübt wird kommt der stiftförmige Bereich 10a des Betätigungsknopfes 10 mit der Ausnehmung 8d des Betätigungshebels 8 aufgrund der wirkenden Federkraft des Federelementes 11 außer Eingriff, insbesondere automatisch außer Eingriff. Ein aufgrund der hier wirkenden Kräfte zwischen dem stiftförmigen Bereich 10a des Betätigungsknopfes 10 und der Ausnehmung 8d des Betätigungshebels 8 wirkender Kraft- und/oder Formschluss wird in diesem Fall dann aufgehoben, so dass die Federkraft des Federelementes 11 entsprechend wirken kann und den Betätigungsknopf 10 in die in Fig. 4 dargestellte Position zurückverschiebt, insbesondere nach oben drückt. Anders ausgedrückt, über das Seilzugelement 5 ist auch die in Fig. 5 dargestellte fixierte Position des Betätigungshebels 8 lösbar bzw. aufhebbar, so dass dann das Sperrelement in seine Verriegelungsposition bewegbar und/oder bringbar ist, insbesondere sich dann der Betätigungshebel 8 aus der in Fig. 5 gezeigten Lage entgegen dem Uhrzeigersinn in die in Fig. 3 dargestellte Lage zurückbewegt bzw. zurück bewegen kann.

In der in den Fig. 3 bis 5 dargestellten Ausführungsform gemäß der vorliegenden Erfindung ist der Notbetätigungsmechanismus 4 bzw. das Seilzugelement 5 in der Art und Weise eines Flaschenzuges ausgebildet bzw. ein Flaschenzug-Prinzip realisiert. Dies darf im Folgenden kurz näher erläutert werden:
Das dem Handgriff 5a des Seilzugelementes 5 gegenüberliegende Ende des Seilzugelementes 5 ist am Gehäuse 2a des Parksperrenaktuators 2 fest angeordnet. Insbesondere ist an dem entsprechenden Ende des Seilzugelementes 5 ein Hülsenelement 13 vorgesehen bzw. vorhanden, das einen umfänglichen Absatz 14 aufweist, der in eine nicht näher bezeichnete Ausnehmung des Gehäuses 2a formschlüssig eingelegt ist. Wie aus den Fig. 3 bis 5 weiter ersichtlich ist, weist der Betätigungshebel 8 einen hier in den Fig. 3 bis 5, insbesondere nach unten ragenden Fortsatz 8e auf, wobei das Seilzugelement 5 dann um den Fortsatz 8e herum geführt ist, um das Flaschenzugprinzip für das Seilzugelement 5 bzw. für den Notbetätigungsmechanismus 4 zur Bewegung des Betätigungshebels 8 zu realisieren. Der Fortsatz 8e kann insbesondere wie aus den Fig. 3 bis 5 ersichtlich auch mit Hilfe eines seitlich versetzten Zapfens eine Ausnehmung / Nut bilden und/oder einen Schlitz aufweisen, in der bzw. in den das Seilzugelement 5 eingefädelt werden kann. Insbesondere kann das Seilzugelement 5 auch bandähnlich ausgebildet und/oder ausgeführt sein, wie in den Fig. 2a und 2b schematisch dargestellt.

Aus den Fig. 3 bis 5 wird deutlich, dass das Seilzugelement 5 mit einem Ende am Gehäuse 2a befestigt ist und an dem Fortsatz 8e, insbesondere in einer an dem entsprechenden Endbereich des Betätigungshebels 8 realisierten Nut gleitend gelagert ist, um das Flaschenzugprinzip, wie oben geschildert zu realisieren. Ein Benutzer bzw. ein Fahrer, der an dem Handgriff 5a zieht, muss im Endeffekt daher nur mit "halber Kraft" ziehen, um den Betätigungshebel 8 entsprechend zu verschwenken, als wenn das Seilzugelement ohne die Verwirklichung des Flaschenzugsprinzip am Endbereich des Betätigungshebels angeordnet wäre.

Mit der hier dargestellten Vorrichtung 1 sind daher entsprechende Vorteile erzielt und die eingangs genannten Nachteile entsprechend vermieden. Die Fig. 3 bis 5 zeigen bzw. sollen den Notbetrieb des Parksperrenaktuators 2 verdeutlichen. Der hier in den Fig. 1 bis 5 dargestellte Parksperrenaktuator 2 ist elektromotorisch und/oder elektromechanisch betreibbar, hierfür sind entsprechende elektromotorische Antriebe innerhalb des Gehäuses 2a vorgesehen, die hier jedoch nicht im Einzelnen dargestellt sind. Über den entsprechenden elektromotorischen Antrieb wird das Widerlagerelement 12 im Normalbetrieb, also im elektrischen Betrieb in Richtung der Längsachse des Schubstangenelementes 7 verfahren, wodurch das Sperrelement im Getriebe in die Entriegelungsposition bzw. in die Verriegelungsposition gebracht wird, nämlich über eine dadurch resultierende Bewegung des Schubstangenelementes 7. Im Notbetrieb, wenn insbesondere der Strom ausgefallen ist, ist das Widerlagerelement 12 in einer bestimmten Position im Wesentlichen fixiert bzw. feststehend. Der Notbetrieb wird dann über den Notbetätigungsmechanismus 4 realisiert, insbesondere über das Seilzugelement 5 und den Handgriff 5a und die anderen entsprechenden Komponenten. Der Notbetätigungsmechanismus 4 ist in den Parksperrenaktuator 2 integriert. Insbesondere bei der hier dargestellten sehr bevorzugten Ausführungsform ist das Seilzugelement 5 funktional wirksam mit dem Antriebsmechanismus 6, der das Schubstangenelement 7 und das Widerlagerelement 12 umfasst, insbesondere hier indirekt über den Betätigungshebel 8 gekoppelt. Es können eine Mehrzahl von Komponenten eingespart werden, da die Komponenten des Antriebsmechanismus 6 des Parksperrenaktuators 2 die im Normalbetrieb verwendet werden nun auch für die Notbetätigung, insbesondere für die Notentriegelung mit verwendet werden können.

### Bezugszeichenliste

- 1: Vorrichtung
- 2: Parksperrenaktuator
- 2a: Gehäuse
- 3: Zug-Druck-Betätigungsseil
- 3a: Bowdenzug
- 4: Notbetätigungsmechanismus
- 5: Seilzugelement
- 5a: Handgriff
- 6: Antriebsmechanismus
- 7: Schubstangenelement
- 7a: erster Endbereich
- 7b: zweiter Endbereich
- 7c: Absatz
- 8: Betätigungshebel
- 8a: erstes Ende
- 8b: zweites Ende
- 8c: wulstförmiger Bereich
- 8d: Ausnehmung
- 8e: Fortsatz
- 9: (erstes) Federelement
- 10: Betätigungsknopf
- 10a: stiftförmiger Bereich
- 11: (zweites) Federelement
- 12: Widerlagerelement
- 13: Hülsenelement
- 14: Absatz

## Patentansprüche

1. Vorrichtung (1) zur Betätigung einer Parksperre eines Getriebes eines Fahrzeuges, insbesondere eines Automatikgetriebes eines Kraftfahrzeuges, mit mindestens einem ansteuerbaren und/oder elektrisch betreibbaren Parksperrenaktuator (2) mit einem Gehäuse (2a), wobei mit Hilfe des Parksperrenaktuators (2) ein Sperrelement in eine Verriegelungsposition zur wirksamen Aktivierung der Parksperre des Getriebes oder in eine Entriegelungsposition zur wirksamen Deaktivierung der Parksperre des Getriebes bewegbar und/oder bringbar ist, wobei ein Notbetätigungsmechanismus (4) vorgesehen und/oder vorhanden ist mit dessen Hilfe, bei entsprechender Betätigung, das Sperrelement in eine Entriegelungsposition zur Deaktivierung der Parksperre bewegbar und/oder bringbar ist, wenn eine elektrische Ansteuerung und/oder der elektrische Betrieb des Parksperrenaktuators (2) ausgefallen ist und/oder wenn ein Benutzer eine Bewegung des Fahrzeugs, bei noch aktivierter Parksperre, realisieren möchte, wobei der Notbetätigungsmechanismus (4) mindestens ein Seilzugelement (5) aufweist, wobei wenn der Notbetätigungsmechanismus (4) von einem Benutzer betätigt wird und an dem mindestens einen Seilzugelement (5) eine Zugkraft ausgeübt wird dann das Sperrelement in seine Entriegelungsposition zur Deaktivierung der Parksperre bewegbar und/oder bringbar ist, wobei das mindestens eine Seilzugelement (5) funktional wirksam derart mit einem Antriebsmechanismus (6) des Parksperrenaktuators (2) verbunden und/oder gekoppelt ist, so dass bei entsprechender Betätigung des mindestens einen Seilzugelementes (5) dann mit Hilfe des Antriebsmechanismus (6) des Parksperrenaktuators (2) das Sperrelement in die Entriegelungsposition bewegbar und/oder bringbar ist, wobei der Antriebsmechanismus (6) des Parksperrenaktuators (2) zur Bewegung und/oder Positionierung des Sperrelementes ein bewegbar angeordnetes Schubstangenelement (7) mit einem ersten und einem zweiten Endbereich (7a, 7b) aufweist, wobei das mindestens eine Seilzugelement (5) indirekt mit dem Schubstangenelement (7), mit dem zweiten Endbereich (7b) des Schubstangenelementes (7) wirksam gekoppelt ist, wobei funktional wirksam zwischen dem zweiten Endbereich (7b) des Schubstangenelementes (7) und dem Seilzugelement (5) ein Betätigungshebel (8) verschwenkbar angeordnet ist, wobei ein erstes Ende (8a) des Betätigungshebels (8) gelenkig verschwenkbar angelenkt ist und ein dem ersten Ende (8a) gegenüberliegender Endbereich des Betätigungshebels (8) mit dem Seilzugelement (5) wirksam verbunden ist, wobei ein einem Handgriff (5a) des mindestens einen Seilzugelementes (5) gegenüberliegendes Ende des mindestens einen Seilzugelementes (5) am Gehäuse (2a) des Parksperrenaktuators (2) fest angeordnet ist und wobei das mindestens eine Seilzugelement (5) mit dem dem ersten Ende (8a) gegenüberliegenden Endbereich des Betätigungshebels (8) so funktional wirksam verbunden ist, dass ein Flaschenzug-Prinzip zur Betätigung des Betätigungshebels (8) realisiert wird, so dass der Benutzer an dem Handgriff (5a) nur mit halber Kraft ziehen muss als sonst notwendig, um den Betätigungshebel (8) zu verschwenken, und wobei das mindestens eine Z Seilzugelement (5) um einen Fortsatz (8e) an dem dem ersten Ende (8a) gegenüberliegenden Endbereich des Betätigungshebels (8) geführt ist.

2. Vorrichtung nach Anspruch 1, **dadurch gekennzeichnet, dass** der Antriebsmechanismus (6) ein mit dem Schubstangenelement (7) zumindest teilweise funktional wirksam gekoppeltes Widerlagerelement (12) aufweist, das einerseits über mindestens einen Anschlag und andererseits über ein Federelement (9) mit dem Schubstangenelement (7) gekoppelt ist.

3. Vorrichtung nach einem der Ansprüche 1 oder 2, **dadurch gekennzeichnet, dass** ein Zug-Druck-Betätigungsseil (3), insbesondere ein Bowdenzug (3a), mit dem Schubstangenelement (7), insbesondere mit dem ersten Endbereich (7a) des Schubstangenelementes (7) direkt oder indirekt wirksam gekoppelt ist und insbesondere mit Hilfe des Zug-Druck-Betätigungsseils (3) das Sperrelement im Getriebe entsprechend steuerbar und/oder betätigbar ist, nämlich in seine Entriegelungsposition oder Verriegelungsposition bringbar ist.

4. Vorrichtung nach einem der Ansprüche 1 bis 3, **dadurch gekennzeichnet, dass** der Betätigungshebel (8) einen wulstförmigen Abschnitt (8c) zur Kontaktierung des zweiten Endbereiches (7b) des Schubstangenelementes (7) aufweist.

5. Vorrichtung nach Anspruch 2, **dadurch gekennzeichnet, dass** das Federelement (9) wirksam zwischen dem Widerlagerelement (12) und einem Absatz (7c) des Schubstangenelementes (7) angeordnet ist und das Schubstangenelement (7) über das Federelement (9) derart kraftbeaufschlagt ist, so dass das Sperrelement bei einer in Richtung der Kraftbeaufschlagung des Federelementes (9) verursachten Bewegung des Schubstangenelementes (7) dann in seine Verriegelungsposition bewegbar und/oder bringbar ist.

6. Vorrichtung nach den Ansprüchen 4 und 5, **dadurch gekennzeichnet, dass** bei der Betätigung des mindestens einen Seilzugelementes (5) mit einer Zugkraft, insbesondere beim Ziehen an dem Handgriff (5a) des Seilzugelementes (5), der Betätigungshebel (8) derart verschwenkbar ist, so dass sein wulstförmiger Bereich (8c) das Schubstangenelement (7) entgegen der Federkraft des Federelementes (9) bewegt, wobei hierüber dann das Sperrelement in seine Entriegelungsposition bewegbar und/oder bringbar ist, insbesondere aber das Widerlagerelement (12) dann in seiner Position verbleibt und/oder in seiner Position blockiert ist.

7. Vorrichtung nach einem der Ansprüche 2, 5 oder 6, **dadurch gekennzeichnet, dass** nach dem Aufbringen der Zugkraft an dem mindestens einen Seilzugelement (5) und nach der entsprechenden Bewegung des Schubstangenelementes (7), nämlich dann wenn keine Zugkraft mehr auf das mindestens eine Seilzugelement (5) ausgeübt wird, insbesondere wenn der Handgriff (5a) des mindestens einen Seilzugelementes (5) losgelassen wird, aufgrund der vom Federelement (9) ausgeübten Kraftbeaufschlagung dann das Schubstangenelement (7) in Richtung der Kraftbeaufschlagung verschoben und/oder bewegt wird, so dass das Sperrelement in seine Verriegelungsposition zurück bewegbar und/oder bringbar ist, insbesondere dann das Widerlagerelement (12) in seiner Position verbleibt und/oder eine Bewegung des Widerlagerelementes (12) blockiert und/oder verhindert ist.

8. Vorrichtung nach einem der Ansprüche 2, 5, 6 oder 7, **dadurch gekennzeichnet, dass** nach und/oder bei der entsprechenden Betätigung des Notbetätigungsmechanismus (4) der Betätigungshebel (8) in seiner das Schubstangenelement (7) entgegen der Federkraft des Federelements (9) verschobenen Position, wenn das Sperrelement seine Entriegelungsposition aufweist, lösbar fixierbar ist, insbesondere so dass aufgrund der damit auch fixierten Positionierung des Schubstangenelementes (7) das Sperrelement dann in die Entriegelungsposition bewegt ist und hierin auch verbleibt.

9. Vorrichtung nach Anspruch 8, **dadurch gekennzeichnet, dass** zur lösbaren Fixierung des Betätigungshebels (8) ein Betätigungsknopf (10) vorgesehen und/oder vorhanden ist.

10. Vorrichtung nach Anspruch 9, **dadurch gekennzeichnet, dass** der Betätigungsknopf (10) einen stiftförmigen Bereich (10a) aufweist, wobei der stiftförmige Bereich (10a) in eine Ausnehmung (8d) des Betätigungshebels (8) zur Fixierung des Betätigungshebels (8) einführbar ist.

11. Vorrichtung nach Anspruch 10, **dadurch gekennzeichnet, dass** ein weiteres, zweites - Federelement (11) vorgesehen und/oder im Bereich des Betätigungsknopfes (10) angeordnet ist, so dass der stiftförmige Bereich (10a) des Betätigungsknopfes (10) entgegen der Federkraft des Federelementes (11) in die Ausnehmung (8d) des Betätigungshebels (8) zumindest teilweise einführbar ist.

12. Vorrichtung nach Anspruch 11, **dadurch gekennzeichnet, dass** nach einer Fixierung des Betätigungshebels (8) durch den Betätigungsknopf (10) dann bei einer auf das mindesten eine Seilzugelement (5) ausgeübten, insbesondere wiederholten, Zugkraft der stiftförmige Bereich (10a) des Betätigungsknopfes (10) mit der Ausnehmung (8d) des Betätigungshebels (8) aufgrund der wirkenden Federkraft des zweiten Federelementes (11) automatisch außer Eingriff kommt, so dass über das mindestens eine Seilzugelement (5) auch die fixierte Position des Betätigungshebels (8) lösbar ist und das Sperrelement dann in seine Verriegelungsposition bewegbar und/oder bringbar ist.

## Claims

1. A device (1) for actuating a parking lock of a transmission of a vehicle, in particular of an automatic transmission of a motor vehicle, having at least one controllable and/or electrically operable parking lock actuator (2) with a housing (2a), wherein, with the aid of the parking lock actuator (2), a locking element can be moved and/or brought into a locking position for the operative activation of the parking lock of the transmission or into an unlocking position for the operative deactivation of the parking lock of the transmission, wherein an emergency actuation mechanism (4) is provided and/or present with the aid of which, when actuated accordingly, the locking element can be moved and/or brought into an unlocking position for deactivating the parking lock, if an electrical control and/or the electrical operation of the parking lock actuator (2) has failed and/or if a user wishes to move the vehicle, when the parking lock is still activated, wherein the emergency actuation mechanism (4) has at least one cable pulling element (5), wherein, if the emergency actuation mechanism (4) is actuated by a user and a pulling force is exerted on the at least one cable pulling element (5), then the locking element can be moved and/or brought into its unlocking position for deactivating the parking lock, wherein the at least one cable pulling element (5) is functionally operatively connected and/or coupled to a drive mechanism (6) of the parking lock actuator (2) in such a way that, when the at least one cable pulling element (5) is actuated accordingly, the locking element can then be moved and/or brought into the unlocking position with the aid of the drive mechanism (6) of the parking lock actuator (2), wherein the drive mechanism (6) of the parking lock actuator (2) has a movably arranged push rod element (7) with a first and a second end region (7a, 7b) for moving and/or positioning the locking element, wherein the at least one cable pulling element (5) is indirectly operatively coupled to the push rod element (7), to the second end region (7b) of the push rod element (7), wherein an actuating lever (8) is functionally operatively arranged in a pivotable manner between the second end region (7b) of the push rod element (7) and the cable pulling element (5), wherein a first end (8a) of the actuating lever (8) is hinged in an articulatedly pivotable manner, and an end region of the actuating lever (8) opposite the first end (8a) is operatively connected to the cable pulling element (5), wherein an end of the at least one cable pulling element (5) opposite a handle (5a) of the at least one cable pulling element (5) is fixedly arranged on the housing (2a) of the parking lock actuator (2), and wherein the at least one cable pulling element (5) is functionally operatively connected to the end region of the actuating lever (8) opposite the first end (8a) in such a way that a pulley principle for actuating the actuating lever (8) is realized, so that the user has to pull on the handle (5a) only with half the force than otherwise necessary to pivot the actuating lever (8), and wherein the at least one cable pulling element (5) is guided around an extension (8e) at the end region of the actuating lever (8) opposite the first end (8a).

2. The device according to claim 1, **characterized in that** the drive mechanism (6) has an abutment element (12) that is at least partially functionally operatively coupled to the push rod element (7), which abutment element is coupled to the push rod element (7) on the one hand via at least one stop and on the other hand via a spring element (9).

3. The device according to one of claims 1 or 2, **characterized in that** a push-pull actuating cable (3), in particular a Bowden cable (3a), is directly or indirectly operatively coupled to the push rod element (7), in particular to the first end region (7a) of the push rod element (7), and in particular with the aid of the push-pull actuating cable (3) the locking element in the transmission can be controlled and/or actuated accordingly, specifically can be brought into its unlocking position or locking position.

4. The device according to any one of claims 1 to 3, **characterized in that** the actuating lever (8) has a bead-shaped section (8c) for contacting the second end region (7b) of the push rod element (7).

5. The device according to claim 2, **characterized in that** the spring element (9) is operatively arranged between the abutment element (12) and a shoulder (7c) of the push rod element (7), and the push rod element (7) is force-loaded via the spring element (9) in such a way that the locking element can then be moved and/or brought into its locking position when a movement of the push rod element (7) is caused in the direction of the application of force of the spring element (9).

6. The device according to claims 4 and 5, **characterized in that,** when the at least one cable pulling element (5) is actuated with a pulling force, in particular when the handle (5a) of the cable pulling element (5) is pulled, the actuating lever (8) can be pivoted in such a way that its bead-shaped region (8c) moves the push rod element (7) against the spring force of the spring element (9), wherein the locking element can then be moved and/or brought into its unlocking position, but in particular the abutment element (12) then remains in its position and/or is blocked in its position.

7. The device according to any one of claims 2, 5 or 6, **characterized in that,** after the application of the pulling force to the at least one cable pulling element (5) and after the corresponding movement of the push rod element (7), specifically when a pulling force is no longer exerted on the at least one cable pulling element (5), in particular when the handle (5a) of the at least one cable pulling element (5) is released, due to the application of force exerted by the spring element (9), the push rod element (7) is then displaced and/or moved in the direction of the application of force, so that the locking element can be moved and/or brought back into its locking position, in particular the abutment element (12) then remains in its position and/or a movement of the abutment element (12) is blocked and/or prevented.

8. The device according to any one of claims 2, 5, 6 or 7, **characterized in that,** after and/or during the corresponding actuation of the emergency actuation mechanism (4), the actuating lever (8) can be releasably fixed in its position displacing the push rod element (7) against the spring force of the spring element (9) when the locking element has its unlocking position, in particular so that, due to the positioning of the push rod element (7) also fixed therewith, the locking element is then moved into the unlocking position and also remains therein.

9. The device according to claim 8, **characterized in that** an actuating knob (10) is provided and/or present for releasably fixing the actuating lever (8).

10. The device according to claim 9, **characterized in that** the actuating knob (10) has a pin-shaped region (10a), wherein the pin-shaped region (10a) is insertable into a recess (8d) of the actuating lever (8) for fixing the actuating lever (8).

11. The device according to claim 10, **characterized in that** a further, second spring element (11) is provided and/or arranged in the region of the actuating knob (10), so that the pin-shaped region (10a) of the actuating knob (10) can be at least partially inserted into the recess (8d) of the actuating lever (8) against the spring force of the spring element (11).

12. The device according to claim 11, **characterized in that,** after fixing of the actuating lever (8) by the actuating knob (10), the pin-shaped region (10a) of the actuating knob (10) then automatically disengages from the recess (8d) of the actuating lever (8) due to the acting spring force of the second spring element (11) when a pulling force, in particular a repeated pulling force, is exerted on the at least one cable pulling element (5), so that the fixed position of the actuating lever (8) can also be released via the at least one cable pulling element (5) and the locking element can then be moved and/or brought into its locking position.

## Revendications

1. Dispositif (1) d'actionnement d'un verrouillage de stationnement d'une boîte de vitesses d'un véhicule, en particulier une boîte de vitesses automatique d'un véhicule automobile, comprenant au moins un actionneur de verrouillage de stationnement (2) pouvant être commandé et/ou fonctionner électriquement comportant un boîtier (2a), dans lequel, à l'aide de l'actionneur de verrouillage de stationnement (2), un élément de verrouillage peut être déplacé et/ou amené dans une position de verrouillage pour l'activation efficace du verrouillage de stationnement de la boîte de vitesses ou dans une position de déverrouillage pour la désactivation efficace du verrouillage de stationnement de la boîte de vitesses, dans lequel un mécanisme d'actionnement de secours (4) est prévu et/ou disponible et à l'aide de celui-ci, en cas d'actionnement correspondant, l'élément de verrouillage peut être déplacé et/ou amené dans une position de déverrouillage pour la désactivation du verrouillage de stationnement, lorsqu'une commande électrique et/ou le fonctionnement électrique de l'actionneur de verrouillage de stationnement (2) est en panne et/ou lorsqu'un utilisateur souhaite réaliser un déplacement du véhicule lorsque le verrouillage de stationnement est encore activé, dans lequel le mécanisme d'actionnement de secours (4) présente au moins un élément câble de traction (5), dans lequel, lorsque le mécanisme d'actionnement de secours (4) est actionné par un utilisateur et qu'une force de traction est appliquée sur l'au moins un élément câble de traction (5), alors l'élément de verrouillage peut être déplacé et/ou amené dans sa position de déverrouillage pour la désactivation du verrouillage de stationnement, dans lequel l'au moins un élément câble de traction (5) est relié et/ou accouplé de manière fonctionnellement efficace avec un mécanisme de commande (6) de l'actionneur de verrouillage de stationnement (2), de sorte que lors d'un actionnement correspondant de l'au moins un élément câble de traction (5), alors, à l'aide du mécanisme de commande (6) de l'actionneur de verrouillage de stationnement (2), l'élément de verrouillage soit déplacé et/ou amené dans la position de déverrouillage, dans lequel le mécanisme de commande (6) de l'actionneur de verrouillage de stationnement (2) présente, pour le déplacement et/ou le positionnement de l'élément de verrouillage, un élément tige de poussée (7) agencé mobile avec une première et une seconde zone d'extrémité (7a, 7b), dans lequel l'au moins un élément câble de traction (5) est accouplé indirectement de manière efficace avec l'élément tige de poussée (7) avec la seconde zone d'extrémité (7b) de l'élément tige de poussée (7), dans lequel un levier d'actionnement (8) est agencé pivotant de manière fonctionnellement efficace entre la seconde zone d'extrémité (7b) de l'élément tige de poussée (7) et l'élément câble de traction (5), dans lequel une première extrémité (8a) du levier d'actionnement (8) est articulée pivotante avec une charnière et une zone d'extrémité du levier d'actionnement (8) opposée à la première extrémité (8a) est reliée de manière efficace à l'élément câble de traction (5), dans lequel une extrémité de l'au moins un élément câble de traction (5) opposée à un manche (5a) de l'au moins un élément câble de traction (5) est agencé fixe sur le boîtier (2a) de l'actionnement de verrouillage de stationnement (2) et dans lequel l'au moins un élément câble de traction (5) est relié de manière fonctionnellement efficace avec la zone d'extrémité du levier d'actionnement (8) opposée à la première extrémité (8a) de telle sorte qu'un principe de palan soit réalisé pour l'actionnement du levier d'actionnement (8) de sorte qu'un utilisateur doive tirer sur le manche (5a) uniquement avec la moitié de la force qui serait autrement nécessaire, pour faire pivoter le levier d'actionnement (8) et dans lequel l'au moins un élément câble de traction (5) est guidé autour d'une saillie (8e) sur la zone d'extrémité du levier d'actionnement (8) opposée à la première extrémité (8a).

2. Dispositif selon la revendication 1, **caractérisé en ce que** le mécanisme de commande (6) présente un élément butée (12) accouplé de manière au moins partiellement fonctionnellement efficace à l'élément tige de poussée (7), qui est accouplé d'un côté par le biais d'au moins un arrêt et d'un autre côté par le biais d'un élément ressort (9) avec l'élément tige de poussée (7).

3. Dispositif selon l'une quelconque des revendications 1 ou 2, **caractérisé en ce qu'**un câble d'actionnement par traction et pression (3), en particulier un câble Bowden (3a), est accouplé directement ou indirectement de manière efficace avec l'élément tige de poussée (7), en particulier avec la première zone d'extrémité (7a) de l'élément tige de poussée (7) et en particulier à l'aide du câble d'actionnement par traction et pression (3), l'élément de verrouillage pouvant être commandé et/ou actionné de manière correspondante dans la boîte de vitesses, à savoir dans sa position de déverrouillage ou sa position de verrouillage.

4. Dispositif selon l'une quelconque des revendications 1 à 3, **caractérisé en ce que** le levier d'actionnement (8) présente une section en forme de bourrelet (8c) pour venir en contact avec la seconde zone d'extrémité (7b) de l'élément tige de poussée (7).

5. Dispositif selon la revendication 2, **caractérisé en ce que** l'élément ressort (9) est agencé de manière efficace entre l'élément butée (12) et un palier (7c) de l'élément tige de poussée (7) et l'élément tige de poussée (7) est soumis à une force par le biais de l'élément ressort (9) de telle sorte que l'élément de verrouillage, par un déplacement provoqué dans la direction de l'application de la force de l'élément ressort (9) de l'élément tige de poussée (7), puisse être déplacé et/ou amené dans sa position de verrouillage.

6. Dispositif selon les revendications 4 et 5, **caractérisé en ce que,** lors de l'actionnement de l'au moins un élément câble de traction (5) avec une force de traction, en particulier lors de la traction sur le manche (5a) de l'élément câble de traction (5), le levier d'actionnement (8) peut pivoter de sorte que sa zone en forme de bourrelet (8c) déplace l'élément tige de poussée (7) contre la force de ressort de l'élément ressort (9), dans lequel par la suite l'élément de verrouillage peut alors être déplacé et/ou amené dans sa position de déverrouillage, en particulier cependant l'élément butée (12) reste alors dans sa position et/ou est bloqué dans sa position.

7. Dispositif selon l'une quelconque des revendications 2, 5 ou 6, **caractérisé en ce que,** après l'application de la force de traction sur l'au moins un élément câble de traction (5) et après le déplacement correspondant de l'élément tige de poussée (7), à savoir lorsqu'aucune force de traction n'est plus appliquée sur l'au moins un élément câble de traction (5), en particulier lorsque le manche (5a) de l'au moins un élément câble de traction (5) est relâché, en raison de la sollicitation par force appliquée par l'élément ressort (9), l'élément tige de poussée (7) est décalé et/ou déplacé en direction de la sollicitation par force, de sorte que l'élément de verrouillage puisse être déplacé et/ou amené en retour dans sa position de verrouillage, en particulier alors l'élément butée (12) reste dans sa position et/ou un déplacement de l'élément butée (12) est bloqué et/ou empêché.

8. Dispositif selon l'une quelconque des revendications 2, 5, 6 ou 7, **caractérisé en ce que,** après et/ou lors de l'actionnement correspondant du mécanisme d'actionnement de secours (4), le levier d'actionnement (8) peut être fixé de manière détachable dans sa position avec l'élément tige de poussée (7) décalé contre la force de ressort de l'élément ressort (9), lorsque l'élément de verrouillage présente sa position de déverrouillage, en particulier de sorte que, en raison du positionnement ainsi également fixé de l'élément tige de poussée (7), l'élément de verrouillage est alors déplacé dans la position de déverrouillage et y reste également.

9. Dispositif selon la revendication 8, **caractérisé en ce que,** pour la fixation détachable du levier d'actionnement (8), un bouton d'actionnement (10) est prévu et/ou disponible.

10. Dispositif selon la revendication 9, **caractérisé en ce que** le bouton d'actionnement (10) présente une zone en forme de tige (10a), dans lequel la zone en forme de tige (10a) peut être guidée dans une cavité (8d) du levier d'actionnement (8) pour la fixation du levier d'actionnement (8).

11. Dispositif selon la revendication 10, **caractérisé en ce qu'**un autre second élément ressort (11) est prévu et/ou agencé dans la zone du bouton d'actionnement (10), de sorte que la zone en forme de tige (10a) du bouton d'actionnement (10) puisse être au moins partiellement guidée contre la force de ressort de l'élément ressort (11) dans la cavité (8d) du levier d'actionnement (8).

12. Dispositif selon la revendication 11, **caractérisé en ce que,** après une fixation du levier d'actionnement (8) par le bouton d'actionnement (10), lors d'une force de traction appliquée, en particulier répétée, sur l'au moins un élément câble de traction (5), la zone en forme de tige (10a) du bouton d'actionnement (10) sort automatiquement de sa prise avec la cavité (8d) du levier d'actionnement (8) en raison de la force de ressort active du second élément ressort (11), de sorte que, par le biais de l'au moins un élément câble de traction (5), la position fixée du levier d'actionnement (8) soit également détachable et l'élément de verrouillage puisse être déplacé et/ou amené dans sa position de verrouillage.
